# EUROPEAN PATENT APPLICATION

(11) **EP 4 641 074 A1**
(43) Date of publication of application: **29.10.2025**
(21) Application number: 23906452.0
(22) Date of filing: 20.10.2023
(51) Int. Cl.: F17D 5/00, G05B 9/02

(54) **PIPING SYSTEM AND SAFETY DEVICE**

(30) Priority: 21.12.2022 JP 2022204066
(71) Applicant: Mitsubishi Heavy Industries Machinery Systems, Ltd., Kobe-shi, Hyogo 652-8585 (JP)
(72) Inventor: YUI Sugihiko, Kobe-shi, Hyogo 652-8585 (JP); KOBAYASHI Hiroyuki, Kobe-shi, Hyogo 652-8585 (JP)
(74) Representative: Hoffmann Eitle
(86) International application number: PCT/JP2023/037970
(87) International publication number: WO 2024/135077

(57) **Abstract**

This piping system comprises: piping through which a fluid flows; piping equipment provided midway of the piping, and having an openable/closable part; a fixation body that is responsible for mechanically fixing the openable/closable part to the piping equipment, and has an operating unit that performs fixation and releases fixation; and a safety device that selects between a locked state for preventing operation of the operating unit and an unlocked state for allowing the operation. The safety device comprises: a switch that maintains the locked state when power is not supplied, and switches to the unlocked state when power is supplied; and a shield that, in the locked state, is mechanically connected to the switch, and covers up the operating unit, and, in the unlocked state, is mechanically disconnected from the switch.

## Description

### Technical Field

The present disclosure relates to a piping system having a function of protecting a portion requiring maintenance (maintenance check) not to be operated in a piping system in which hot water or the like flows.

### Background Art

For example, in a piping system provided in a beverage production facility, a beverage flows in the piping system. In addition, a risky liquid such as a washing liquid, a chemical liquid, or hot water for cleaning machinery forming the production facility may flow. In addition, in this type of the piping system, a required portion is opened when maintenance is performed. A strainer that captures foreign substances may be provided in an intermediate portion of the piping system. The strainer includes a mesh-shaped screen inside a housing, and the foreign substances captured by the screen are removed during the maintenance. For this purpose, it is necessary to detach a lid of the strainer. However, the above-described risky liquid may previously flow in the piping system before and after the strainer. Therefore, the maintenance of the strainer is performed after an operator confirms safety in advance by checking whether the liquid remains before and after the strainer. Here, although the strainer has been described as an example, without being limited to the strainer, the safety is confirmed in advance at a portion of piping equipment in the piping system where the maintenance is performed.

For example, PTL 1 discloses a configuration in which a lock mechanism for prohibiting opening of the lid is provided when a temperature and a pressure exceed predetermined values. More specifically, an electromagnetic lock including a metal plate provided in the lid and an electromagnet disposed to face the plate has been proposed. In the electromagnetic lock mechanism, when the temperature or the like exceeds the predetermined value, the electromagnet is energized to generate a magnetic force and magnetically attract the metal plate. In this manner, opening of the lid is prohibited. When the temperature or the like is equal to or smaller than the predetermined value, energizing the electromagnet is stopped. In this manner, the opening of the lid is allowed.

### Citation List

### Patent Literature

[PTL 1] Japanese Unexamined Patent Application Publication No. 2005-238237

### Summary of Invention

### Technical Problem

In PTL 1, the opening of the lid can be temporarily prohibited by a magnetic attraction force when the electromagnet generates the magnetic force. However, when a person can come into contact with an openable/closable portion such as the lid, even when the portion is locked by the magnetic attraction force or the like, nobody can deny a possibility that the openable/closable portion is opened.

For the above-described reason, an object of the present disclosure is to provide a safety device which can further reduce a possibility that an openable/closable portion is opened, and a piping system including the safety device.

### Solution to Problem

According to the present disclosure, there is provided a piping system including piping in which a fluid flows, piping equipment provided in an intermediate portion of the piping and having an openable/closable portion, a fixing body serving to mechanically fix the openable/closable portion and the piping equipment and including an operation unit that performs the fixing and releases the fixing, and a safety device that selects between a locked state for preventing an operation on the operation unit and an unlocked state for allowing the operation.

The safety device includes a switch that maintains the locked state when power supply is not received and that enters the unlocked state when the power supply is received, and a shield body mechanically connected to the switch, and covering and hiding the operation unit in the locked state, and mechanically disconnected from the switch of the shield body in the unlocked state.

According to the present disclosure, a safety device selects a locked state for preventing an operation on an operation unit and an unlocked state for allowing the operation.

The safety device includes a switch that changes a state to the locked state where power supply is not received and changes a state to the unlocked state where the power supply is received, and a shield body mechanically connected to the switch, and covering and hiding the operation unit in the locked state, and mechanically disconnected from the switch in the unlocked state.

### Advantageous Effects of Invention

According to a safety device of the present disclosure, a shield body mechanically connected to a switch covers and hides an operation unit. Therefore, a possibility that an openable/closable portion is opened can be further reduced.

### Brief Description of Drawings

Fig. 1 is a side view showing a piping system according to an embodiment.
Fig. 2 is a side view showing a main part of the piping system in Fig. 1.
Fig. 3 is a view taken along an arrow A in Fig. 2, and is a view taken along a line B-B in Fig. 2.
Fig. 4 is a view showing a locked state [LOCK] and an unlocked state [FREE] in a safety device.
Fig. 5 is a view showing a locked state [LOCK] and an unlocked state [FREE] in a switch.
Fig. 6 is a flowchart showing a preferred procedure for maintenance of a strainer in a piping system including a plurality of types of measurement equipment.
Fig. 7 is a view showing an example of a piping system including a gas filter.

### Description of Embodiments

Hereinafter, a piping system 1 according to an embodiment will be described with reference to the accompanying drawings. As an example, the piping system 1 includes a strainer 10 in an intermediate portion of the piping system 1, and includes a safety device 30 provided with a lock function of preventing opening of a lid 15 of the strainer 10. The safety device 30 is provided with a function (first function) of continuously locking the lid 15 even when power supply is turned off, and in addition, is provided with a function (second function) of preventing an operation of a butterfly screw 17D for opening the lid 15 of the strainer 10 in a locked state. The safety device 30 is provided with the two functions.

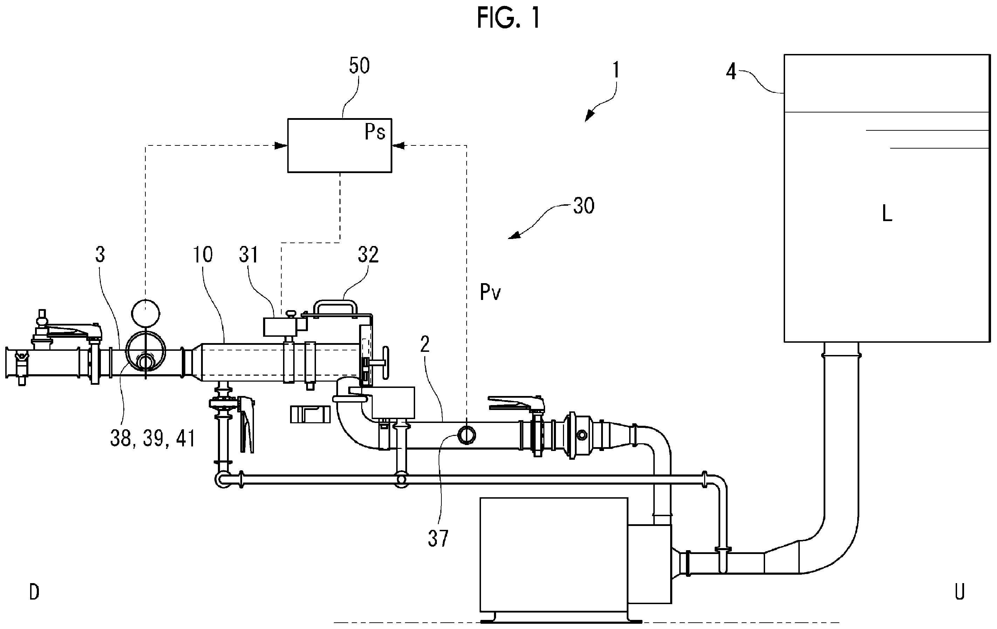

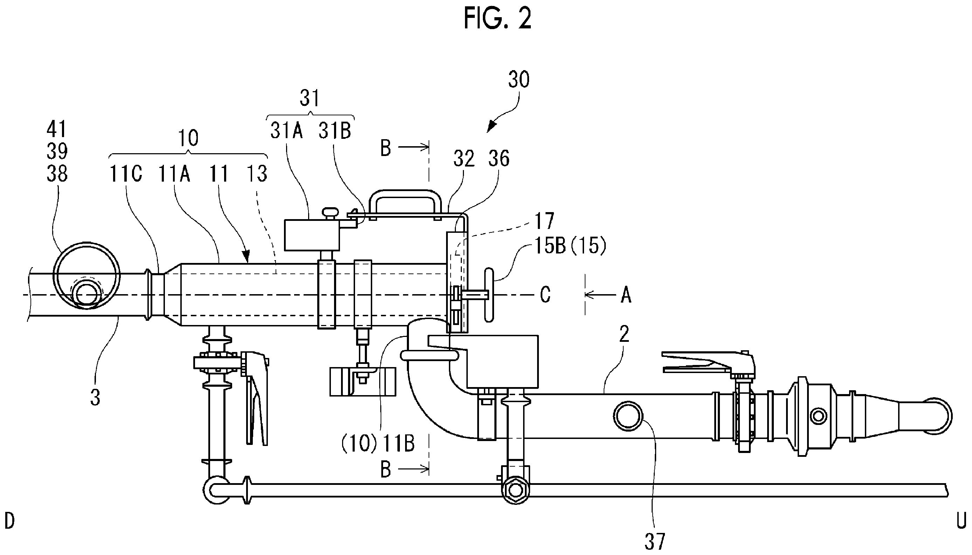

### [Configuration of Piping System 1: Figs. 1 and 2]

As shown in Figs. 1 and 2, as an example, the piping system 1 includes upstream-side piping 2 and downstream-side piping 3 when the strainer 10 is set as a boundary. The upstream-side piping 2 is connected to a tank 4 that stores a liquid L, and the liquid L stored in the tank 4 flows in the order of the upstream-side piping 2, the strainer 10, and the downstream-side piping 3. In this way, an "upstream side" and a "downstream side" in the upstream-side piping 2 and the downstream-side piping 3 are specified with reference to a direction in which the liquid L flows. However, the "upstream side" and the "downstream side" have relative meanings, and for example, the strainer 10 is located downstream of the upstream-side piping 2, but the strainer 10 is located upstream of the downstream-side piping 3. The downstream-side piping 3 is continuous further downstream, compared to the drawing, but description thereof will be omitted here.

In the piping system 1, for example, a liquid L may flow which is risky when a person touches the liquid L, such as a chemical liquid or hot water. The liquid L may be present in the piping system 1 in a state where a pressure is applied to the liquid L, and when the lid 15 is erroneously opened while remaining in the state where pressure is applied to the liquid L, the liquid L is ejected. As an example, the safety device 30 is provided to prevent this event.

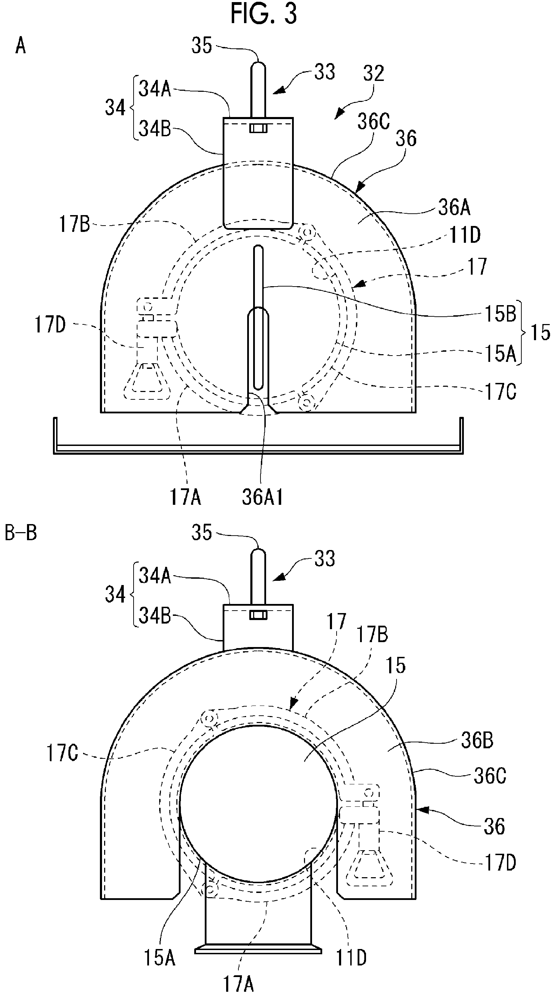

### [Strainer 10: Figs. 2 and 3]

The strainer 10 removes foreign substances from the liquid L flowing from the upstream-side piping 2, and causes the liquid L to flow toward the downstream-side piping 3.

As shown in Figs. 2 and 3, as an example, the strainer 10 includes a cylindrical housing 11, a cylindrical sieve 13 installed inside the housing 11, the lid 15 that closes an opening on an upstream side U of the housing 11, and a fastener 17 that fixes the lid 15 and the housing 11 to each other. In addition, as an example, each of the above-described elements forming the strainer 10 is formed of a metallic material having excellent corrosion resistance, such as stainless steel. The strainer 10 is an example of piping equipment of the present disclosure, and in addition, the lid 15 is an example of an openable/closable portion of the present disclosure.

As shown in Fig. 2, the housing 11 includes a housing body 11A, an upstream connection end 11B provided on a side of one end portion of the housing body 11A, to which the upstream-side piping 2 is connected, and a downstream connection end 11C provided in the other end portion of the housing body 11A, to which the downstream-side piping 3 is connected. The upstream connection end 11B is provided on a side surface of the housing body 11A to be orthogonal to a central axis C of the housing body 11A, and the downstream connection end 11C is formed such that a central axis thereof coincides with the central axis C. The strainer 10 is a member called an L-type strainer, but in the present disclosure, another type of strainer can be used.

In addition, as shown in Fig. 3, the housing 11 includes an opening 11D to which the lid 15 is attached. When the liquid L passes through the strainer 10 to remove the foreign substances, the opening 11D is sealed with the lid 15. However, during maintenance, the lid 15 is detached and the sieve 13 is pulled out from the housing body 11A. In this way, an interior as a gap of the housing body 11A is cleaned, and the foreign substances captured by the sieve 13 are removed and cleaned. When the cleaned sieve 13 is disposed at a predetermined position inside the housing body 11A, the lid 15 is fastened.

For example, a metal mesh in which a metal wire such as a stainless steel wire is woven in a lattice shape, a resin mesh cross, or the like is applied to the sieve 13. In the present disclosure, a mesh opening degree of the sieve 13 is optional, and may be set in accordance with sizes of the foreign substances to be captured.

The lid 15 includes a lid body 15A fitted to the opening 11D, and a T-shaped handle 15B connected to the lid body 15A and operated when the lid body 15A is pulled out from the opening 11D. When mechanical fastening (fixing) between the lid body 15A and the housing 11 by the fastener 17 is released in the lid body 15A, the lid body 15A can be pulled out from the opening 11D by pulling the handle 15B toward the upstream side (U). Since the opening 11D is opened, the sieve 13 can be taken out to the outside of the strainer 10, and maintenance for the sieve 13 and the strainer 10 can be performed.

The fastener 17 is a mechanical lock mechanism, and is referred to as a sanitary joint, a sanitary clamp band, or the like. As shown in Fig. 3, the fastener 17 includes three band elements 17A, 17B, and 17C as an example. The three band elements 17A, 17B, and 17C surround the housing body 11A, and the band element 17A and the band element 17B are fastened by tightening the butterfly screw 17D. When the butterfly screw 17D is loosened, the band element 17A and the band element 17B are unfastened. In this manner, the lid 15 can be pulled out. In this way, since the fastener 17 is tightened or loosened by the butterfly screw 17D, mechanical locking between the lid 15 and the housing 11 are maintained and released. However, the safety device 30 causes the butterfly screw 17D not to be operated unless a specific condition is satisfied. The fastener 17 is an example of a fixing body of the present disclosure, and the butterfly screw 17D is an example of an operation unit in the present disclosure. Hereinafter, the safety device 30 will be described. In addition, as long as the lid body 15A and the housing 11 can be mechanically fixed, another fixing means other than the fastener 17 can also be used.

### [Safety Device 30: Figs. 1, 2, 3, and 4]

As shown in Fig. 2, the safety device 30 includes a switch 31 supported at a predetermined position of the housing 11, and a shield body 32 brought into a locked state for preventing an operation on the butterfly screw 17D or an unlocked state for allowing the operation. In the shield body 32, either the locked state or the unlocked state is selected depending on a state (locked state or unlocked state) of the switch 31. In addition, the safety device 30 includes a pressure sensor 37 that measures a pressure inside the upstream-side piping 2, and a controller 50 that acquires a pressure measurement result from the pressure sensor 37 and transmits an instruction to the switch 31, based on the pressure measurement result.

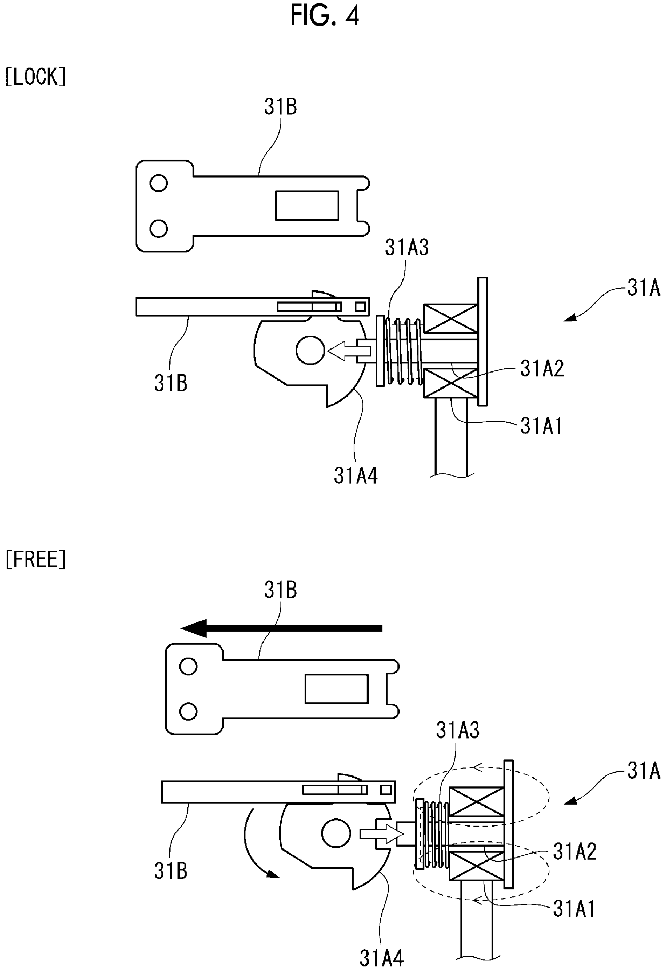

The switch 31 includes a switch body 31A and a lock body 31B inserted into and removed from the switch body 31A, and selectively switches between two states of the locked state and the unlocked state. As an example, a solenoid lock type switch is used as the switch 31. With regard to an example of the solenoid lock type switch, a basic operation will be described with reference to Fig. 4.

The switch body 31A includes a solenoid 31A1, a rod 31A2 disposed in an inner gap of the solenoid 31A1, a compression coil spring 31A3 provided between the solenoid 31A1 and the rod 31A2, and a cam 31A4 related to the rod 31A2.

In the locked state, power is not supplied to the solenoid 31A1, and a magnetic force is not generated from the solenoid 31A1. Therefore, the rod 31A2 is fitted into a cam groove of the cam 31A4 by an elastic force of the compression coil spring 31A3. In this manner, rotation of the cam 31A4 is restrained. In this case, the lock body 31B cannot be pulled out from the switch body 31A, and the switch 31 is brought into the locked state. At this time, the switch 31 and the shield body 32 are mechanically connected.

In the unlocked state, the power is supplied to the solenoid 31A1. The magnetic force generated by excitation of the solenoid 31A1 exceeds the elastic force of the compression coil spring 31A3, the compression coil spring 31A3 is compressed, and the rod 31A2 moves to a side separated from the cam 31A4. In this manner, the cam 31A4 can be rotated. In this case, as indicated by an arrow in Fig. 4, the lock body 31B can be pulled out from the switch body 31A, and the switch 31 is brought into the unlocked state. At this time, the switch 31 and the shield body 32 are mechanically disconnected.

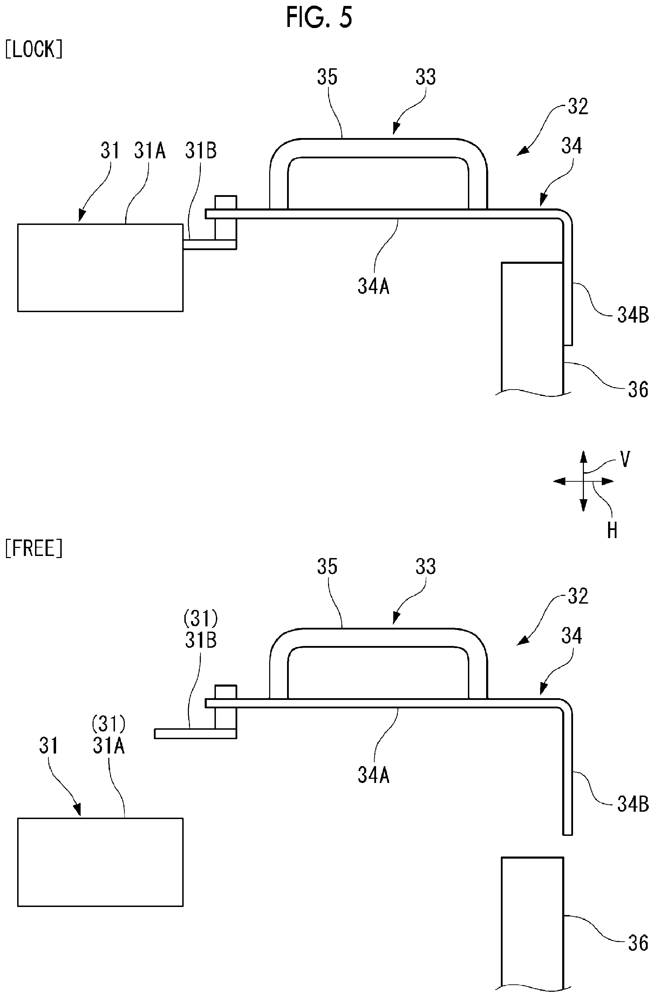

An operation of the shield body 32 corresponding to the two states of the switch 31 will be described with reference to Fig. 5. The locked state is indicated as [LOCK] in Fig. 5, and the unlocked state is indicated as [FREE] in Fig. 5. The switch 31 is configured to remain in the locked state without changing a state to the unlocked state unless a specific electrical command is received, and even when the power supply is turned off in the locked state, the locked state can be maintained as it is. The electrical command for changing a state from the locked state to the unlocked state is issued from the controller 50, based on the measurement result of the pressure sensor 37. In the unlocked state, the lock body 31B can be pulled out from the switch body 31A. Therefore, when a knob 35 is gripped and the shield body 32 is moved, the lock body 31B is separated from the switch body 31A. In this way, the operation on the butterfly screw 17D is allowed.

The shield body 32 is formed of two members as an example.

As shown in Figs. 3 and 5, the shield body 32 includes a connector 33 mechanically connected to the switch 31 via the lock body 31B, and a cover 36 that covers at least the butterfly screw 17D of the fastener 17 when the connector 33 is located at a lock position. The connector 33 and the cover 36 are manufactured as separate bodies, but may be integrated thereafter by means such as welding, or may be used as separate bodies.

The connector 33 includes a restraining piece 34 that restrains the movement of the cover 36 at the lock position, and the knob 35 attached to the restraining piece 34.

For example, the restraining piece 34 is formed of a metal plate material having an L-shape in a longitudinal cross section, and includes a support portion 34A of which one end side is detachably supported by the lock body 31B of the switch 31, and a holding portion 34B that hangs down from the other end side of the support portion 34A. The support portion 34A extends along a horizontal direction H in a state of being supported by the lock body 31B, and the holding portion 34B extends along a vertical direction V. Since the holding portion 34B is in contact with the cover 36, the cover 36 cannot be detached from the position.

As shown in Figs. 2 and 3, the cover 36 includes a first wall 36A having a semicircular shape and a second wall 36B having a horseshoe shape provided to face the first wall 36A. A cutout 36A1 for exposing the handle 15B outward by penetrating the cover 36 is formed on the first wall 36A. Outer peripheral edges of the first wall 36A and the second wall 36B are connected by a third wall 36C having a U-shape. In the cover 36, particularly, the butterfly screw 17D of the fastener 17 is accommodated in a gap surrounded by the first wall 36A, the second wall 36B, and the third wall 36C.

When the lock body 31B of the switch 31 is in the locked state and the shield body 32 is located at the lock position, the butterfly screw 17D is covered and hidden by the cover 36. Therefore, even an operator in charge of the piping system 1 cannot operate the butterfly screw 17D. Whether the lock body 31B is in the locked state or in the unlocked state is determined by an instruction from the controller 50. That is, the lock body 31B remains in the locked state as long as there is no instruction from the controller 50, and the lock body 31B changes a state to the unlocked state when there is the instruction from the controller 50.

As shown in Fig. 1, the controller 50 acquires a measurement pressure value Pv which is a pressure measured by the pressure sensor 37, and based on the acquired measurement pressure value Pv, the controller 50 determines whether the lock body 31B has to remain in the locked state as it is or has to be changed to the unlocked state. The controller 50 holds a reference pressure value Ps to perform this determination, and compares the measurement pressure value Pv acquired from the pressure sensor 37 with the reference pressure value Ps. The controller 50 can continuously acquire the measurement pressure value Pv in time from the pressure sensor 37, or can intermittently acquire the measurement pressure value Pv in time. The reference pressure value Ps may be 0 MPa.

When the measurement pressure value Pv exceeds the reference pressure value Ps as a result of the comparison, the controller 50 determines that the liquid L flows in the upstream-side piping 2 in which the pressure sensor 37 is provided, and determines that the lock body 31B has to remain in the locked state as it is (determination of the locked state). When the acquired measurement pressure value Pv is equal to the reference pressure value Ps or lower than the reference pressure value Ps, the controller 50 determines that the liquid L does not flow or a small amount of the liquid L flows in the upstream-side piping 2 in which the pressure sensor 37 is provided, and the lock body 31B may be moved to the unlocked state (determination of the unlocked state). The determination of the unlocked state is reflected in an operation of the switch 31. That is, the controller 50 issues a command to the switch 31 to change the lock body 31B to the unlocked state.

When the switch 31 issues a command to change a state to the unlocked state, that is, when the power is supplied to the solenoid 31A1, the shield body 32 holding the cover 36 so far can be moved to be separated from the cover 36 as indicated by [LOCK] in Fig. 5 to [FREE] in Fig. 5.

In this way, the butterfly screw 17D is loosened after the cover 36 is detached. In this manner, the fastening of the fastener 17 between the housing 11 and the lid 15 can be released. In this case, maintenance such as removing the foreign substances by pulling out the sieve 13 inside the housing 11 can be performed. When the shield body 32 and the cover 36 are integrated, the shield body 32 and the cover 36 can be moved together.

### [Advantageous Effects of Piping System 1]

Since the piping system 1 includes the safety device 30 described above, the following advantageous effects are achieved.

According to the safety device 30, the butterfly screw 17D is covered with the cover 36, and the operator cannot touch the butterfly screw 17D at all. Therefore, the operator cannot erroneously pull out the lid 15. The cover 36 is pressed by the connector 33 located at the lock position so that the cover 36 cannot be moved. Therefore, the operator cannot touch the butterfly screw 17D unless the operator intends to touch the butterfly screw 17D. Therefore, according to the safety device 30, a possibility that the lid 15 as the openable/closable portion is opened can be further reduced.

Even when the power supply is turned off in the switch 31 of the safety device 30, the switch 31 maintains the locked state, and the butterfly screw 17D as the operation unit is covered with the cover 36 of the shield body 32. Therefore, the operator cannot detach the lid 15. Therefore, according to the safety device 30, the safety device 30 can continuously maintain the function even when the power supply is turned off.

According to the safety device 30, the controller 50 determines that the piping system 1 is safe, based on the measurement pressure value Pv, and thereafter, causes the switch 31 to change a state from the locked state to the unlocked state. Therefore, even when the lid 15 is detached, safety of the operator is ensured.

In addition, the locked state or the unlocked state is confirmed and determined by the controller 50. Therefore, it is possible to prevent hot water or a chemical agent from leaking out in a state where the lid 15 is opened or during the maintenance.

In addition to the above-described advantageous effect, the configurations described as examples in the embodiment can be optionally selected or the configurations can be appropriately changed to other configurations.

### [Switch Driving Source]

For example, in the safety device 30, as a preferable embodiment, an example has been described in which the solenoid 31A1 and the compression coil spring 31A3 are used as a driving source for moving the rod 31A2 of the switch 31, but the present disclosure is not limited thereto. For example, other driving sources such as a fluid pressure actuator including a piston-cylinder mechanism and an electric actuator including a linear motor can be used. These driving sources can cause the connector 33 to reciprocate between the locked state and the unlocked state.

### [Type of Measurement Equipment: Refer to Fig. 1]

In addition, as a preferred embodiment, an example has been described in which the pressure sensor 37 is used as equipment for measuring the state of the liquid L in the safety device 30, but the measurement equipment in the present disclosure is not limited to the pressure sensor 37. For example, various types of the measurement equipment such as a concentration sensor 38, a temperature sensor 39, a level meter 41, and a conductivity meter can be used. One or a plurality of types of various measurement equipment are selected depending on the liquid L flowing in the piping system 1. An example of disposing the concentration sensor 38, the temperature sensor 39, and the level meter 41 is shown by reference numerals in Fig. 1.

When the controller 50 acquires that a concentration of a specific component of the liquid L flowing in the upstream-side piping 2 or the downstream-side piping 3 which is measured by the concentration sensor 38 is equal to or smaller than a threshold value, the controller 50 can issue a command to change a state of the switch 31 from the locked state to the unlocked state. That is, based on a measurement result obtained by the concentration sensor, the operator can determine that a type of the liquid L is safe, for example, the type is water. In addition, the type of the liquid L can also be determined by using a conductivity meter.

When the controller 50 acquires that a temperature of the liquid L flowing in the upstream-side piping 2 or the downstream-side piping 3 which is measured by the temperature sensor 39 is equal to or smaller than a threshold value, the controller 50 can issue a command to change the state of the switch 31 from the locked state to the unlocked state. That is, based on a measurement result obtained by the temperature sensor 39, the operator can determine whether the temperature of the liquid L is safe.

When the controller 50 acquires that a liquid level of the liquid L flowing in the upstream-side piping 2 or the downstream-side piping 3 which is measured by the level meter 41 is equal to or smaller than a threshold value, the controller 50 can issue a command to change the state of the switch 31 from the locked state to the unlocked state. That is, based on a measurement result obtained by the level meter 41, the operator can determine whether the amount of the liquid L is safe.

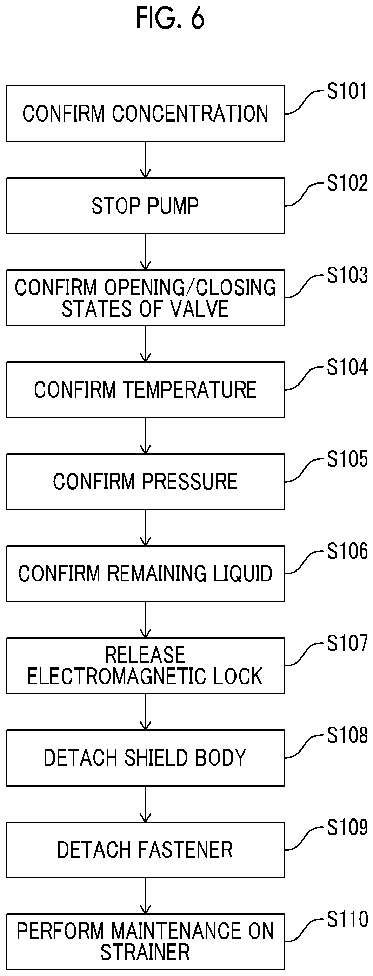

When the plurality of types of the measurement equipment are provided as described above, an example of a procedure for performing maintenance on the strainer 10 will be described with reference to Fig. 6. As an assumption, a pump (not shown) that pumps the liquid L flowing in the piping system 1 is driven. The maintenance of the strainer 10 is performed based on the assumption that the pump is stopped. In addition, the measurement equipment and the equipment which appear below are connected to the controller 50, and the controller 50 acquires information on the measurement results from each measurement equipment and information on the state of the equipment to control the operations of the corresponding equipment.

### [Whether to Stop Pump: S101, S102]

For example, whether to stop the pump is determined by confirming the concentration obtained by the concentration sensor 38 provided in the downstream-side piping 3 (Fig. 6, S101), and the pump is stopped when the concentration is low (Fig. 6, S102). Without being limited to the strainer 10, the maintenance of the piping system 1 is performed in a state where the pump is stopped. Information (pump information) indicating that the pump is stopped is provided to the controller 50.

### [Confirmation of Opening/Closing States of Valve: S103]

Next, opening/closing states of various valves for example, such as a drain valve provided in the piping system 1 is confirmed by a detector provided corresponding to each of the valves. The opening/closing state is a state required for performing the maintenance. For example, in a case of the drain valve, it is necessary to open the drain valve to discharge the liquid L remaining in the piping system 1 to the outside of the system. On the other hand, the valve associated with the tank 4 serving as a supply source of the liquid L needs to be closed. As described above, in confirming the opening/closing states of the valves, each of an opening state and a closing state is confirmed. Information (valve information) indicating that various valves are in a state required for the maintenance is provided to the controller 50.

### [Confirmation of Temperature: S104]

When the controller 50 acquires valve information, the temperature of the liquid L is subsequently confirmed by the temperature sensor 39.

The confirmation is performed, based on whether a measurement temperature value Tv of the liquid L measured by the temperature sensor 39 is equal to or smaller than a reference temperature value Ts. Information (temperature information) that the measurement temperature value Tv is equal to or smaller than the reference temperature value Ts is provided to the controller 50.

### [Confirmation of Pressure: S105]

When the temperature information is acquired, the controller 50 subsequently confirms the pressure of the liquid L by using the pressure sensor 37.

The confirmation is performed, based on whether a measurement pressure value Pv of the liquid L measured by the pressure sensor 37 is equal to or smaller than a reference pressure value Ps. Information (pressure information) indicating that the measurement pressure value Pv is equal to or smaller than the reference pressure value Ps is provided to the controller 50.

### [Confirmation of Remaining Liquid: S106]

When the controller 50 acquires the pressure information, the controller 50 confirms the liquid level of the liquid L in the piping system 1 by using the level meter 41.

The confirmation is performed, based on whether a measurement liquid level value Sv of the liquid L measured by the level meter 41 is equal to or smaller than a reference liquid level value Ss. Information (liquid level information) indicating that the measurement liquid level value Sv is equal to or smaller than the reference liquid level value Ss is provided to the controller 50.

### [Unlocking Switch: S107]

When the controller 50 sequentially acquires the valve information, the temperature information, the pressure information, and the liquid level information, the controller 50 issues an instruction of the power supply to the solenoid 31A1 of the switch body 31A of the switch 31 in the locked state so far. In this way, the switch 31 is brought into the unlocked state.

### [Detachment of Shield body 32 and Fastener 17: S108, S109]

When the switch 31 is brought into the unlocked state, the shield body 32 is detached. In this way, the butterfly screw 17D of the fastener 17 can be operated. Therefore, the fastener 17 is detached from the housing 11 and the lid 15 by loosening the butterfly screw 17D.

### [Detachment/Maintenance of Strainer 10: S110]

When the lid 15 is detached, the sieve 13 is pulled out from the housing 11, and the maintenance is performed on the sieve 13 and the inside of the housing 11.

In the above description, it is assumed that the controller 50 confirms four information of the valve information, the temperature information, the pressure information, and the liquid level information. However, the present disclosure is not limited thereto. For example, in the four information, when a rule is set such that subsequent determination is not performed unless preceding determination satisfies the condition, the switch 31 may be set to the unlocked state, based on only the fourth liquid level information.

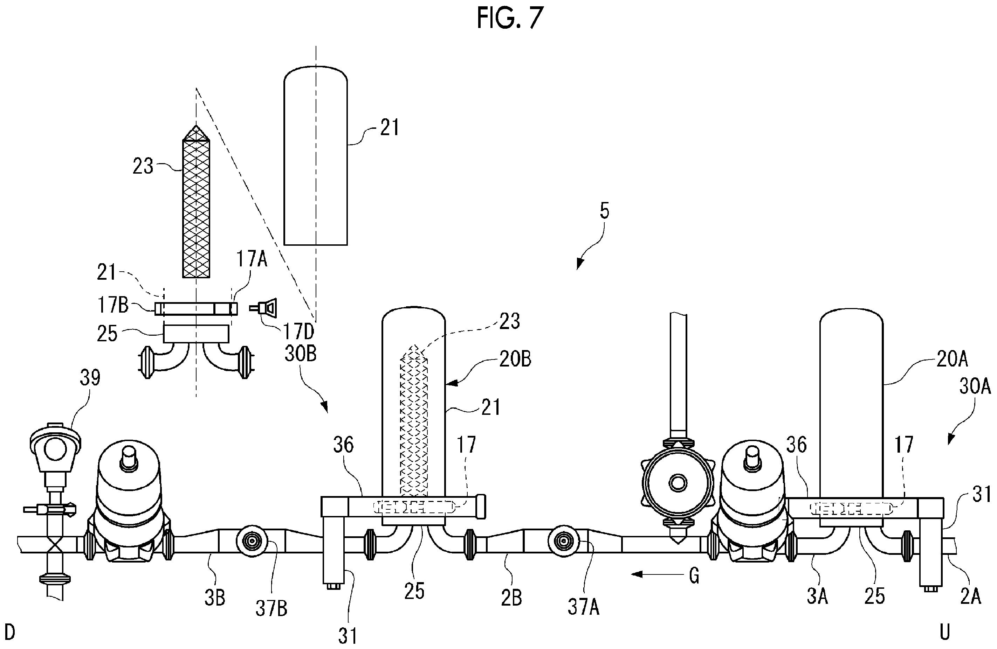

### [Other Application Target of Safety Device 30: Fig. 7]

Although the strainer 10 for removing the foreign substances from the liquid L has been described as an example of an opening device in the piping system 1, an application target of the safety device 30 in the present disclosure is not limited thereto. In the piping system, various mechanical elements including a mechanical lock mechanism can be applied.

In the piping system 5 shown in Fig. 7, a gas G flows from the upstream side U toward a downstream side D. In a range shown in the drawing, the piping system 5 includes two gas filters 20Aand 20B. The upstream-side piping 2A and a downstream-side piping 3A are connected to the gas filter 20A, and the upstream-side piping 2B and a downstream-side piping 3B are connected to the gas filter 20B. As in the strainer 10, each of the gas filters 20A and 20B includes a housing 21, a sieve 23 accommodated inside the housing 21, and a lid 25 that closes opening of the housing 21. In addition, the housing 21 and the lid 25 are fastened by the fastener 17 including the band elements 17A and 17B. For example, a lower end portion of the housing 21 surrounds an outer peripheral surface of the lid 25, and the fastener 17 tightens the lower end portion of the housing 21. In this manner, both are fastened. In the same manner as the piping system 1, the butterfly screw 17D is involved in this fastening. Although the housing 21, the sieve 23, the lid 25, and the like are shown in Fig. 7 for the gas filter 20B, the gas filter 20A also includes the same elements. In addition, although the gas filters 20A and 20B for the gas are described here as examples, the present disclosure can be applied to a filter for a fluid, a filter for steam, and the like.

In the piping system 5, each of safety devices 30A and 30B is provided corresponding to each of the two gas filters 20A and 20B. That is, the fastener 17, particularly, the butterfly screw 17D, is covered with the cover 36, and the locked state where the butterfly screw 17D is covered with the cover 36 is maintained even when the power supply of the switch 31 is turned off. The safety devices 30A and 30B include the same elements as the safety device 30 in the piping system 1, but repeated description in the piping system 1 will be avoided, and minimum required reference numerals will be assigned.

The piping system 5 includes a pressure sensor 37A on the downstream side of the gas filter 20A and a pressure sensor 37B on the downstream side of the gas filter 20B. In addition, the piping system 5 is provided with a temperature sensor 39 on the downstream side of the pressure sensor 37B.

In the piping system 5, a state of the gas G is measured by the pressure sensors 37A and 37B and the temperature sensor 39, and the switch 31 can change a state from the locked state to the unlocked state, based on measurement values thereof.

### [Additional Notes]

According to the above-described disclosure, the following configurations are understood.
[1] The piping system (1, 2) includes
   the piping (2, 3) in which the fluid (L, G) flows,
   the piping equipment (10, 25) provided in an intermediate portion of the piping (2, 3) and having the openable/closable portion (15, 20A, 20B),
   the fixing body (17) serving to mechanically fix the openable/closable portion (15, 20A, 20B) and the piping equipment (10, 25) and including the operation unit (17D) that performs the fixing and releases the fixing, and
   the safety device (30) that selects between the locked state for preventing the operation on the operation unit (17D) and the unlocked state for allowing the operation.
   The safety device (30) includes
      the switch (31) that maintains the locked state when power supply is not received and that enters the unlocked state when the power supply is received, and
      the shield body (32) mechanically connected to the switch (31), and covering and hiding the operation unit (17D) in the locked state, and mechanically disconnected from the switch (31) of the shield body (32) in the unlocked state.
[2] In the piping system according to [1], the safety device (30) includes the measurement equipment (37, 38, 39, 41) that measures a state of the fluid (L, G) provided in the intermediate portion of the piping (2, 3); and the controller (50) that instructs the switch (31) to change the state from the locked state to the unlocked state, based on the measurement value in the measurement equipment (37, 38, 39, 41).
[3] In the piping system according to [2],
   the safety device (30) includes the plurality of types of the measurement equipment (37, 38, 39, 41) which measure different states of a fluid (L, G), and
   the controller (50) instructs the switch (31) to change a state from the locked state to the unlocked state, based on the measurement value of each of the plurality of types of the measurement equipment (37, 38, 39, 41).
[4] In the piping system according to [3], the measurement equipment includes at least the pressure sensor (37).
[5] In the piping system according to [1],
   the switch (31) includes
   the driving source (31A1, 31A3, or the like) changed from the locked state to the unlocked state by receiving the power supply, and
   the lock body (31B) mechanically connected to the driving source (31A, 31A3, or the like) in the locked state and mechanically disconnected from the driving source (3 1A, 31A3, or the like) in the unlocked state.
[6] In the piping system according to [5],
   the driving source (31A1, 31A3, or the like) includes the solenoid (31A1) that generates the magnetic field by receiving the power supply, and
   when the solenoid (31A1) generates the magnetic field, the lock body (31B) and the driving source (31A, 31A3, or the like) are mechanically disconnected.

The safety device (30) selects the locked state for preventing the operation on the operation unit (17D) and the unlocked state for allowing the operation. The safety device (30) includes the switch (31) that changes the state to the locked state where power supply is not received and changes a state to the unlocked state where the power supply is received, and the shield body (32) mechanically connected to the switch (31), and covering and hiding the operation unit (17D) in the locked state, and mechanically disconnected from the switch (31) of the shield body (32) in the unlocked state.

### Reference Signs List

1: piping system
2: upstream-side piping
3: downstream-side piping
4: tank
10: strainer
11, 21: housing
11A: housing body
11B: upstream connection end
11C: downstream connection end
11D: opening
13, 23: sieve
15, 25: lid
15A: lid body
15B: handle
17: fastener
17A, 17B, 17C: band element
17D: butterfly screw
20A, 20B: gas filter
30: safety device
31: switch
31A: switch body
31A1: solenoid
31A2: rod
31A3: compression coil spring
31A4: cam
32: shield body
33: connector
34: restraining piece
34A: support portion
34B: holding portion
35: knob
36: cover
36A: first wall
36B: second wall
36C: third wall
37, 37A, 37B: pressure sensor
38: concentration sensor
39: temperature sensor
50: controller
C: central axis
H: horizontal direction
V: vertical direction
L: liquid
G: gas
U: upstream side
D: downstream side

## Claims

1. A piping system comprising:
piping in which a fluid flows;
piping equipment provided in an intermediate portion of the piping and having an openable/closable portion;
a fixing body serving to mechanically fix the openable/closable portion and the piping equipment and including an operation unit that performs the fixing and releases the fixing; and
a safety device that selects between a locked state for preventing an operation on the operation unit and an unlocked state for allowing the operation,
wherein the safety device includes
a switch that maintains the locked state when power supply is not received and that enters the unlocked state when the power supply is received, and
a shield body mechanically connected to the switch, and covering and hiding the operation unit in the locked state, and mechanically disconnected from the switch in the unlocked state.

2. The piping system according to Claim 1,
wherein the safety device includes
measurement equipment that measures a state of the fluid provided in the intermediate portion of the piping, and
a controller that instructs the switch to change a state from the locked state to the unlocked state, based on a measurement value in the measurement equipment.

3. The piping system according to Claim 2,
wherein the safety device includes a plurality of types of the measurement equipment which measure different states of the fluid, and
the controller instructs the switch to change the state from the locked state to the unlocked state, based on the measurement value of each of the plurality of types of the measurement equipment.

4. The piping system according to Claim 3,
wherein the measurement equipment includes at least a pressure sensor.

5. The piping system according to Claim 1,
wherein the switch includes
a driving source operated from the locked state to the unlocked state by receiving the power supply, and
a lock body mechanically connected to the driving source in the locked state and mechanically disconnected from the driving source in the unlocked state.

6. The piping system according to Claim 5,
wherein the driving source includes a solenoid that generates a magnetic field by receiving the power supply, and
when the solenoid generates the magnetic field, the lock body and the driving source are mechanically disconnected.

7. A safety device which selects between a locked state for preventing an operation on an operation unit and an unlocked state for allowing the operation, the safety device comprising:
a switch that changes a state to the locked state where power supply is not received and changes a state to the unlocked state where the power supply is received; and
a shield body mechanically connected to the switch, and covering and hiding the operation unit in the locked state, and mechanically disconnected from the switch in the unlocked state.
